# EUROPÄISCHE PATENTSCHRIFT

(11) **EP 3 942 257 B1**
(45) Veröffentlichungstag und Bekanntmachung des Hinweises auf die Patenterteilung: **08.11.2023**
(21) Anmeldenummer: 19712957.0
(22) Anmeldetag: 19.03.2019
(51) Int. Cl.: G01D 11/24, G01D 5/244, G01D 18/00

(54) **KALIBRIERUNGSVORRICHTUNG FÜR EIN DREHWINKELMESSSYSTEM**
CALIBRATION APPARATUS FOR A ROTATIONAL ANGLE MEASURING SYSTEM
DISPOSITIF D'ÉTALONNAGE CONÇU POUR UN SYSTÈME DE MESURE D'ANGLE DE ROTATION

(43) Veröffentlichungstag der Anmeldung: 26.01.2022
(73) Patentinhaber: Fraba B.V., 6416 SG Heerlen (NL)
(72) Erfinder: LÖKEN, Michael, 52428 Jülich (DE); FINK, Michael, 52134 Herzogenrath (DE)
(74) Vertreter: terpatent Patentanwälte ter Smitten Eberlein-Van Hoof Rütten Daubert
(86) Internationale Anmeldenummer: PCT/EP2019/056855
(87) Internationale Veröffentlichungsnummer: WO 2020/187403

(56) Entgegenhaltungen:
- EP-A1- 0 281 286
- EP-A2- 1 927 823
- CN-U- 205 333 045
- DE-A1-102012 211 907
- JP-A- 2006 207 528
- JP-A- 2011 110 671
- JP-A- 2013 003 053
- JP-U- 3 199 133
- US-A1- 2015 054 669

## Beschreibung

Die Erfindung betrifft eine Kalibrierungsvorrichtung für ein Drehwinkelmesssystem, mit einer um eine Drehachse drehbaren Wellen-Haltevorrichtung, die in einer Kalibrierungs-Stellung der Kalibrierungsvorrichtung drehfest mit einer Messsystem-Welle des Drehwinkelmesssystems verbindbar ist und in einer Lade-Stellung der Kalibrierungsvorrichtung von der Messsystem-Welle entkoppelbar ist, einer rotatorisch feststehenden Gehäuse-Haltevorrichtung, die in der Kalibrierungs-Stellung drehfest mit einem Messsystem-Gehäuse des Drehwinkelmesssystems verbindbar ist und in der Lade-Stellung von dem Messsystem-Gehäuse entkoppelbar ist, und einem Antriebsmotor zum Antreiben der Wellen-Haltevorrichtung.

Für einen präzisen Betrieb einer Maschine ist häufig die Kenntnis eines aktuellen Drehwinkels bzw. einer aktuellen rotatorischen Lage einer drehbaren Welle der Maschine unerlässlich. Solche Positionsangaben spielen beispielsweise bei der Automatisierung von Anlagen - insbesondere zur Steuerung technischer, zumeist hochpräziser Vorgänge - eine wichtige Rolle. So sind beispielsweise zur Steuerung einer Werkzeugmaschine, eines Roboterarms oder ähnlicher Anwendungen stets Drehwinkelmesssysteme zur Positionserfassung erforderlich. Ferner sind solche Drehwinkelmesssysteme auch bei Elektromotoren zur Geschwindigkeits- oder Lageregelung erforderlich, insbesondere um für eine effiziente Spulenansteuerung zu wissen, in welcher rotatorischen Lage sich der Rotor befindet. Je nach Anwendungsbereich können die verwendeten Drehwinkelmesssysteme hierbei verschiedene Abmessungen und Geometrien - insbesondere der Messsystem-Welle - aufweisen.

Um mit dem Drehwinkelmesssystem eine hohe Messgenauigkeit zu erzielen, ist eine zuverlässige und exakte Kalibrierung des Drehwinkelmesssystems erforderlich. Vor diesem Hintergrund ist beispielsweise aus der CN 205333045 U eine Kalibrierungsvorrichtung für ein Drehwinkelmesssystem bekannt. Die offenbarte Kalibrierungsvorrichtung umfasst eine Wellen-Haltevorrichtung, die eine im Wesentlichen Topf-förmige Wellen-Aufnahme aufweist. Eine Messsystem-Welle des zu kalibrierenden Drehwinkelmesssystems ist in die Topf-förmige Wellen-Haltevorrichtung eingeschoben, sodass die Wellen-Haltevorrichtung die Messsystem-Welle radial umschließt. Die Messsystem-Welle ist in einer Kalibrierungs-Stellung der Kalibrierungsvorrichtung über eine Feststellschraube, deren Ende an eine radiale Außenseite der Messsystem-Welle angepresst ist, drehfest mit der Wellen-Haltevorrichtung verbunden. Die Wellen-Haltevorrichtung ist über eine Antriebswelle durch einen Antriebsmotor eines Hochpräzisions-Drehtischs antreibbar. Ein Messsystem-Gehäuse des Drehwinkelmesssystems ist hierbei in der Kalibrierungs-Stellung der Kalibrierungsvorrichtung drehfest mit einer feststehenden Gehäuse-Haltevorrichtung verbunden, um ein Mitdrehen des Messsystem-Gehäuses mit der Messsystem-Welle während des Kalibrierungsprozesses zu verhindern.

Für eine zuverlässige und exakte Kalibrierung des Drehwinkelmesssystems muss während des gesamten Kalibrierungsprozesses eine drehfeste Verbindung zwischen der Messsystem-Welle und der Wellen-Haltevorrichtung sowie zwischen dem Messsystem-Gehäuse und der Gehäuse-Haltevorrichtung sichergestellt sein. Aus diesem Grund muss die Feststellschraube der in der CN 205333045 U offenbarten Kalibrierungsvorrichtung mit einem relativ hohen Drehmoment angezogen werden, um eine hohe Anpresskraft zwischen der Feststellschraube und der Messsystem-Welle zu erzielen und somit eine zuverlässige drehfeste Verbindung zwischen der Wellen-Haltevorrichtung und der Messsystem-Welle zu schaffen. Da diese Anpresskraft jedoch nur auf eine relativ geringe Oberfläche der Messsystem-Welle einwirkt, wird hierdurch punktuell eine hohe mechanische Belastung der Messsystem-Welle erzeugt, die zu einer lokalen Deformation und somit zu einer strukturellen Beschädigung der Messsystem-Welle führen kann. Ferner kann durch die einseitige radiale Belastung der Messsystem-Welle durch die Feststellschraube auch eine Beschädigung des Drehwinkelmesssystems auf Grund einer Verschiebung und/oder Verkippung der Messsystem-Welle im Messsystem-Gehäuse verursacht werden.

Die in der CN 205333045 U offenbarte Kalibrierungsvorrichtung ist auf Grund der Ausgestaltung ihrer Haltevorrichtungen ferner nur für die Kalibrierung von Drehwinkelmesssystemen mit definierten Abmessungen - insbesondere mit einer definierten Wellen-Geometrie - ausgelegt. Die offenbarte Wellen-Haltevorrichtung ist grundsätzlich nur für Drehwinkelmesssysteme geeignet, deren Wellen-Durchmesser kleiner als der Öffnungsdurchmesser der Topf-förmigen Wellen-Aufnahme ist. Ferner können Drehwinkelmesssysteme mit deutlich geringeren WellenDurchmessern als der Öffnungsdurchmesser der Wellen-Aufnahme in der offenbarten Wellen-Haltevorrichtung nur mit Hilfe entsprechender separater Adapter-Elemente zuverlässig und spielfrei eingespannt werden.

Aus der JP 2013 003053 A ist eine Vorrichtung zum Korrigieren eines Encoders bekannt, welche eine um eine Drehachse drehbare Wellen-Haltevorrichtung umfasst, die drehfest mit einer Welle des Encoders verbindbar ist und von der Welle entkoppelbar ist, wobei die Wellen-Haltevorrichtung drei Spannbacken aufweist, die an eine radiale Außenseite der Welle anpressbar, konzentrisch zu der Drehachse angeordnet und gemeinsam radial bewegbar sind.

Es stellt sich daher die Aufgabe, eine Kalibrierungsvorrichtung für ein Drehwinkelmesssystem zu schaffen, die eine zuverlässige und beschädigungsfreie Kalibrierung von Drehwinkelmesssystemen mit unterschiedlichen Abmessungen ermöglicht.

Diese Aufgabe wird durch eine Kalibrierungsvorrichtung für ein Drehwinkelmesssystem mit den Merkmalen des Hauptanspruchs 1 gelöst.

Erfindungsgemäß weist die Wellen-Haltevorrichtung der Kalibrierungsvorrichtung mindestens zwei Spannbacken auf, die in der Kalibrierungs-Stellung an eine radiale Außenseite der Messsystem-Welle anpressbar sind, wobei die mindestens zwei Spannbacken konzentrisch zu der Drehachse angeordnet und gemeinsam radial bewegbar sind.

Die Spannbacken sind konzentrisch - also in gleichem radialem Abstand - zu der Drehachse der Wellen-Haltevorrichtung angeordnet und gemeinsam radial bewegbar, sodass alle Spannpacken - unabhängig von ihrer aktuellen radialen Position - stets konzentrisch zu der Drehachse angeordnet sind. Die Messystem-Welle wird folglich durch die erfindungsgemäße Wellen-Haltevorrichtung zuverlässig konzentrisch zu der Drehachse der Wellen-Haltevorrichtung ausgerichtet, sodass die Messsystem-Welle bei der Kalibrierung exakt um ihre Zentral-Achse angetrieben wird. Hierdurch wird bei der Kalibrierung ein unrunder Lauf der Messsystem-Welle - der zu einer fehlerhaften Kalibrierung und/oder zu einer Beschädigung des Drehwinkelmesssystems führen kann - zuverlässig vermieden.

Die mindestens zwei Spannbacken schaffen ferner eine relativ große Kontaktfläche mit der Messsystem-Welle. Hierdurch ist für eine zuverlässige drehfeste Verbindung zwischen der Wellen-Haltevorrichtung und der Messsystem-Welle nur eine relativ geringe Anpresskraft zwischen den Spannbacken und der Messsystem-Welle erforderlich. Die durch die Wellen-Haltevorrichtung erzeugte mechanische Belastung der Messsystem-Welle ist folglich relativ gering.

Die Spannbacken können beispielsweise in einem sogenannten Spannfutter - auch als Bohrfutter oder Drehfutter bezeichnet - angeordnet sein, wobei die Spannbacken - im Allgemeinen durch Drehen eines Spannrings - gemeinsam radial bewegbar und gleichmäßig an die Messsystem-Welle anpressbar sind. Durch Drehen des Spannrings ist hierbei die Anpresskraft zwischen den Spannbacken und der Messsystem-Welle auf einfache Weise und präzise steuerbar. Vorzugsweise weisen die Spannbacken hierbei jeweils den gleichen Abstand in Umfangsrichtung zueinander auf. Hierdurch heben sich die von der Wellen-Haltevorrichtung erzeugten und auf die Messsystem-Welle einwirkenden radialen Kräfte in der Summe im Wesentlichen gegenseitig auf, wodurch eine Verschiebung und/oder Verkippung der Messsystem-Welle im Messsystem-Gehäuse zuverlässig vermeidbar ist.

Die große Kontaktfläche zwischen den Spanbacken und der Messsystem-Welle, die gleichmäßige Verteilung der Spannbacken entlang des Umfangs der Messsystem-Welle und die präzise Steuerung der Anpresskraft ermöglichen eine zuverlässige und beschädigungsfreie drehfeste Verbindung zwischen der Wellen-Haltevorrichtung und der Messsystem-Welle. Auf Grund der radial bewegbaren Spannbacken ist die Wellen-Haltevorrichtung ferner auf einfache Weise an verschiedene Wellengeometrien - insbesondere verschiedene Wellendurchmesser - anpassbar.

Die erfindungsgemäße Kalibrierungsvorrichtung für ein Drehwinkelmesssystem ermöglicht daher eine zuverlässige und exakte Kalibrierung von Drehwinkelmesssystemen mit unterschiedlichen WellenGeometrien, wobei eine Beschädigung des Drehwinkelmesssystems zuverlässig vermeidbar ist.

Erfindungsgemäß ist ferner ein Spannbacken-Aktuator vorhanden, der eine im Wesentlichen stufenlose radiale Bewegung der Spannbacken ermöglicht. Die stufenlos bewegbaren Spannbacken ermöglichen eine präzise Steuerung der Anpresskraft zwischen den Spannbacken und der Messsystem-Welle, wodurch eine strukturelle Beschädigung der Messsystem-Welle besonders zuverlässig vermeidbar ist. Der Spannbacken-Aktuator treibt hierbei typischerweise den Spannring eines Spannfutters an, um eine präzise und stufenlose radiale Bewegung der Spannbacken zu erzeugen. Der Spannbacken-Aktuator kann als manueller Spannbacken-Aktuator ausgebildet sein, der eine manuelle - im Allgemeinen rein mechanische - Betätigung der Spannbacken durch einen Bediener der Kalibrierungsvorrichtung ermöglicht. Der Spannbacken-Aktuator kann alternativ auch als elektrisch, hydraulisch oder pneumatisch angetriebener Spannbacken-Aktuator ausgebildet sein, der eine elektronische Steuerung der Spannbacken-Bewegung - beispielsweise durch eine elektronische Steuereinheit der Kalibrierungsvorrichtung - ermöglicht.

Erfindungsgemäß ist ferner ein Kopplungsmodul vorhanden, über das der Spannbacken-Aktuator wahlweise mechanisch mit den Spannbacken koppelbar ist oder mechanisch von den Spannbacken entkoppelbar ist. Während des Beladens/Entladens der Kalibrierungsvorrichtung - also zum Einsetzen des Drehwinkelmesssystems in die Kalibrierungsvorrichtung und zum Entnehmen des Drehwinkelmesssystems aus der Kalibrierungsvorrichtung - ist der Spannbacken-Aktuator mechanisch mit den Spannbacken gekoppelt, um das Anpressen der Spannbacken an die Messsystem-Welle nach dem Beladen bzw. ein Lösen der Spannbacken von der Messsystem-Welle vor dem Entladen zu ermöglichen. Während des eigentlichen Kalibrierungsprozesses sind die Spannbacken hingegen von dem Spannbacken-Aktuator entkoppelt, um eine unbeabsichtigte Betätigung der Spannbacken - insbesondere ein unbeabsichtigtes Lösen der Spannbacken von der Messsystem-Welle - während des Kalibrierungsprozesses zu vermeiden, und um einen negativen Einfluss des Kopplungsmoduls auf den Kalibrierungsprozess zu vermeiden. Dies ermöglicht eine besonders zuverlässige und beschädigungsfreie Kalibration des Drehwinkelmesssystems.

Erfindungsgemäß ist ferner eine - vorzugsweise elektronische - Steuereinheit vorhanden, durch die sowohl der Antriebsmotor als auch die Bewegung der Spannbacken steuerbar ist. Hierbei ist die Steuereinheit typischerweise derart ausgelegt, dass die Gehäuse-Haltevorrichtung automatisch geschlossen wird bevor die Wellen-Haltevorrichtung während des Kalibrierungsprozesses durch den Antriebsmotor angetrieben wird. Dies reduziert die Wahrscheinlichkeit von Bedienungsfehlern und schafft somit eine zuverlässige Kalibrierungsvorrichtung.

Erfindungsgemäß ist das Kopplungsmodul ebenfalls durch die Steuereinheit steuerbar. Die Steuereinheit ist hierbei typischerweise derart ausgelegt, dass die Spannbacken über das Kopplungsmodul mechanisch von dem Spannbacken-Antrieb getrennt werden, bevor die Wellen-Haltevorrichtung während des Kalibrierungsprozesses durch den Antriebsmotor angetrieben wird. Hierdurch ist die Bedienungsfehler-Wahrscheinlichkeit zusätzlich reduziert und somit eine besonders zuverlässige und einfach bedienbare Kalibrierungsvorrichtung geschaffen.

In einer vorteilhaften Ausführung der Erfindung weist der Spannbacken-Aktuator ein Stellrad zur manuellen Betätigung der Spannbacken auf. Das Stellrad ist für den Bediener der Kalibrierungsvorrichtung zugänglich angeordnet - beispielsweise an einer Außenseite eines Kalibrierungsvorrichtungs-Gehäuses - und ermöglicht eine einfache und präzise manuelle Betätigung der Spannbacken durch den Bediener.

Vorteilhafterweise weist die Wellen-Haltevorrichtung mindesten drei Spannbacken auf, die in der Kalibrierungs-Stellung an die radiale Außenseite der Messsystem-Welle anpressbar sind, wobei die mindestens drei Spannbacken konzentrisch zu der Drehachse angeordnet und gemeinsam radial bewegbar sind. Die mindesten drei Spannbacken sind vorzugsweise derart angeordnet, dass sie - zumindest in der Kalibrierungs-Stellung der Kalibrierungsvorrichtung - gleichmäßig entlang des Umfangs der Messsystem-Welle verteilt positionierbar sind. Die mindesten drei Spannbacken schaffen eine zuverlässige Zentrierung der Messsystem-Welle in der Wellen-Haltevorrichtung und stellen somit eine konzentrische Positionierung der Messsystem-Welle bezogen auf die Drehachse der Wellen-Haltevorrichtung sicher. Ferner schaffen die mindesten drei Spannbacken - besonders bevorzugt mindestens sechs Spannbacken - eine relativ große Kontaktfläche mit der Messsystem-Welle, sodass die von der Wellen-Haltevorrichtung der Kalibrierungsvorrichtung erzeugte mechanische Belastung der Messsystem-Welle besonders gering ist. Die mindestens drei Spannbacken erlauben ferner ein zuverlässiges Einspannen von Wellen mit einem nichtrunden Wellen-Querschnitt, also mit einem Wellen-Querschnitt der entlang seines Umfangs mindestens eine Abflachung aufweist. Dies schafft eine zuverlässige und gleichzeitig besonders beschädigungsfreie Kalibrierungsvorrichtung, wobei die Wellen-Haltevorrichtung besonders variabel an verschiedene Wellen-Geometrie anpassbar ist.

In einer bevorzugten Ausführung der Erfindung ist auf einer radialen Innenseite mindestens einer Spannbacke eine rutschhemmende Beschichtung vorgesehen. Die rutschhemmende Beschichtung weist einen relativ hohen Reibungskoeffizienten auf und besteht typischerweise aus einem Kunststoff, beispielsweise aus einem Epoxidharz, Polyurethan oder einem Kautschuk. Die rutschhemmende Beschichtung vermeidet - insbesondere auch bei Wellen mit einem runden Wellen-Querschnitt - ein Durchrutschen der Welle in der Wellen-Haltevorrichtung. Ferner verringert die rutschhemmende Beschichtung die für eine zuverlässige drehfeste Verbindung benötigte radiale Anpresskraft. Dies schafft eine besonders zuverlässige und beschädigungsfreie Kalibrierungsvorrichtung.

Vorzugsweise weist die Gehäuse-Haltevorrichtung der erfindungsgemäßen Kalibrierungsvorrichtung mindestens zwei radial bewegbare Kolben auf, die in der Kalibrierungs-Stellung an eine radiale Außenseite des Messsystem-Gehäuses anpressbar sind. Die mindestens zwei Kolben der Gehäuse-Haltvorrichtung sind vorzugsweise jeweils radial bewegbar in einer feststehenden Kolbeneinheit angeordnet. Die Kolbeneinheit kann beispielsweise an der Außenseite eines Kalibrierungsvorrichtungs-Gehäuses befestigt sein. Die Kolbeneinheiten und somit auch die Kolben sind auf einer radialen Außenseite des Messsystem-Gehäuses des Drehwinkelmesssystems anordenbar. Die mindestens zwei Kolben sind radial bezüglich des Messsystem-Gehäuses bewegbar, wobei jeder einzelne Kolben in der Kalibrierungs-Stellung an die radiale Außenseite des typischerweise zylinderförmigen Messsystem-Gehäuses anpressbar ist, um eine zuverlässige drehfeste Verbindung zwischen der Gehäuse-Haltevorrichtung und dem Messsystem-Gehäuse zu schaffen. Unter dem Messsystem-Gehäuse ist hierbei jeder das Drehwinkelmesssystem nach Außen begrenzende Körper zu verstehen, der drehfest mit einem Sensormodul des Drehwinkelmesssystems verbunden ist. Unter dem Messsystem-Gehäuse ist somit insbesondere auch ein Flansch-Element des Drehwinkelmesssystems zu verstehen. Durch die erfindungsgemäße Gehäuse-Haltevorrichtung ist während des Kalibrierungsprozesses ein Mitdrehen des Messsystem-Gehäuses und somit insbesondere ein Mitdrehen eines Messsystem-Sensormoduls mit der Messsystem-Welle - was zu einer fehlerhaften Kalibrierung führen kann - zuverlässig verhindert.

Die Kolbeneinheiten mit den mindestens zwei Kolben sind vorzugsweise gleichmäßig entlang der Außenseite des Messsystem-Gehäuses positionierbar. Ferner sind die mindestens zwei Kolben vorzugsweise unabhängig voneinander bewegbar. Hierdurch sind die Kolben - insbesondere auch bei unsymmetrischen Messsystem-Gehäusen - derart an die radiale Außenseite des Messsystem-Gehäuses anpressbar, dass sich die auf das Messsystem-Gehäuse einwirkenden radialen Kräfte in der Summe im Wesentlichen gegenseitig aufheben. Auf diese Weise ist eine Verschiebung und/oder Verkippung des Messsystem-Gehäuses bezogen auf die Messsystem-Welle - wodurch eine fehlerhafte Kalibrierung und/oder eine signifikante Beschädigung des Drehwinkelmesssystems verursacht werden kann - zuverlässig vermeidbar. Hierbei ist die erfindungsgemäße Gehäuse-Haltevorrichtung mit den radial bewegbaren Kolben variabel an unterschiedliche Geometrien des Messsystem-Gehäuses anpassbar.

Besonders bevorzugt sind die mindestens zwei Kolben jeweils pneumatisch bewegbar. Derartige Kolbeneinheiten sind kostengünstig und erlauben eine präzise und zuverlässige Betätigung der Kolben, wobei die von den Kolben erzeugte radiale Anpresskraft auf einfach Weise steuerbar ist.

In einer vorteilhaften Ausführung der Erfindung ist die Bewegung der Kolben ebenfalls durch die Steuereinheit steuerbar. Hierbei ist die Steuereinheit typischerweise derart ausgelegt, dass die Gehäuse-Haltevorrichtung automatisch geschlossen wird bevor die Wellen-Haltevorrichtung während des Kalibrierungsprozesses durch den Antriebsmotor angetrieben wird. Hierdurch ist - unabhängig vom Bediener der Kalibrierungsvorrichtung - sichergestellt, dass sich das Messsystem-Gehäuse bei der Kalibrierung des Drehwinkelmesssystems nicht mit der Messystem-Welle mitdrehen kann. Dies reduziert die Wahrscheinlichkeit von Bedienungsfehlern und schafft somit eine zuverlässige Kalibrierungsvorrichtung.

Vorteilhafterweise ist die Wellen-Haltevorrichtung der Kalibrierungsvorrichtung über eine Antriebswelle mechanisch an den Antriebsmotor gekoppelt. Die Antriebswelle ist typischerweise an einem ersten axialen Ende drehfest mit der Wellen-Haltevorrichtung und an einem gegenüberliegenden zweiten axialen Ende drehfest mit einem Rotor der Antriebseinheit verbunden. Die Antriebswelle ermöglicht eine einfache und zuverlässige mechanische Kopplung der Wellen-Haltevorrichtung an den Antriebsmotor.

In einer besonders vorteilhaften Ausführung der Erfindung ist ein Referenz-Sensormodul vorgesehen, durch das ein Drehwinkel der Antriebswelle erfassbar ist. Das Referenz-Sensormodul ist vorzugsweise relativ hochauflösend, beispielweise ein hochauflösendes optisches oder magnetisches Sensormodul. Das Referenz-Sensormodul ermöglicht eine einfache sowie genaue Erfassung des aktuellen Antriebswellen-Drehwinkels und somit des aktuellen Drehwinkels der drehfest mit der Messystem-Welle verbundenen Wellen-Haltevorrichtung. Dies schafft eine kostengünstige und exakte Kalibrierungsvorrichtung.

Drehwinkelmesssysteme können mit unterschiedlich konfektionierten Anschlusssteckern ausgeführt sein, d.h. der Anschlussstecker des Drehwinkelmesssystems kann verschiedene Belegungen der Stifte/Buchsen aufweisen. In einer vorteilhaften Ausführung der Erfindung ist daher eine Selektionsschaltung vorgesehen, über die die Kalibrierungsvorrichtung elektrisch und/oder signaltechnisch mit dem Drehwinkelmesssystem - insbesondere mit einem Sensormodul des Drehwinkelmesssystems - verbindbar ist. Derartige Selektionsschaltungen werden auch als Multiplexer bezeichnet und ermöglichen ein wahlweises Durchschalten verschiedener Eingänge auf einen Ausgang oder umgekehrt. Die Selektionsschaltung erlaubt eine einfache elektrische/signaltechnische Verbindung zu unterschiedlich konfektionierten Anschlusssteckern, ohne dass hierfür verschiedene Adapter notwendig sind. Dies schafft eine Kalibrierungsvorrichtung, die auf einfache Weise an verschiedene Drehwinkelmesssystem-Ausführungen adaptierbar ist.

Ein Ausführungsbeispiel einer erfindungsgemäßen Kalibrierungsvorrichtung für ein Drehwinkelmesssystem wird nachfolgend anhand der beigefügten Figuren beschrieben, wobei
Figur 1 eine schematische Abbildung einer Kalibrierungs-Stellung einer erfindungsgemäßen Kalibrierungsvorrichtung mit eingesetztem Drehwinkelmesssystem in teilweise geschnittener Darstellung zeigt,
Figur 2 eine Lade-Stellung der Kalibrierungsvorrichtung mit eingesetztem Drehwinkelmesssystem aus Figur 1 zeigt, und
Figur 3 einen schematischen Querschnitt von Spannbacken einer Wellen-Haltevorrichtung der Kalibrierungsvorrichtung sowie einer Messsystem-Welle des Drehwinkelmesssystems in der Kalibrierungs-Stellung zeigt.

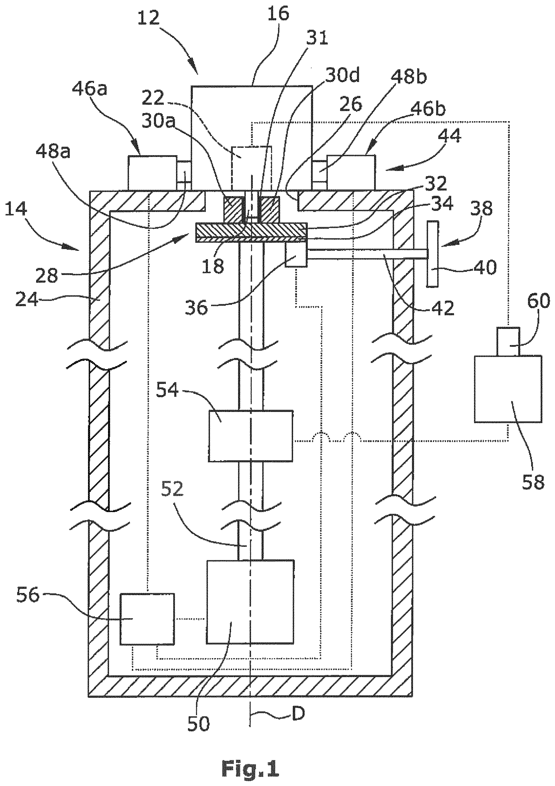

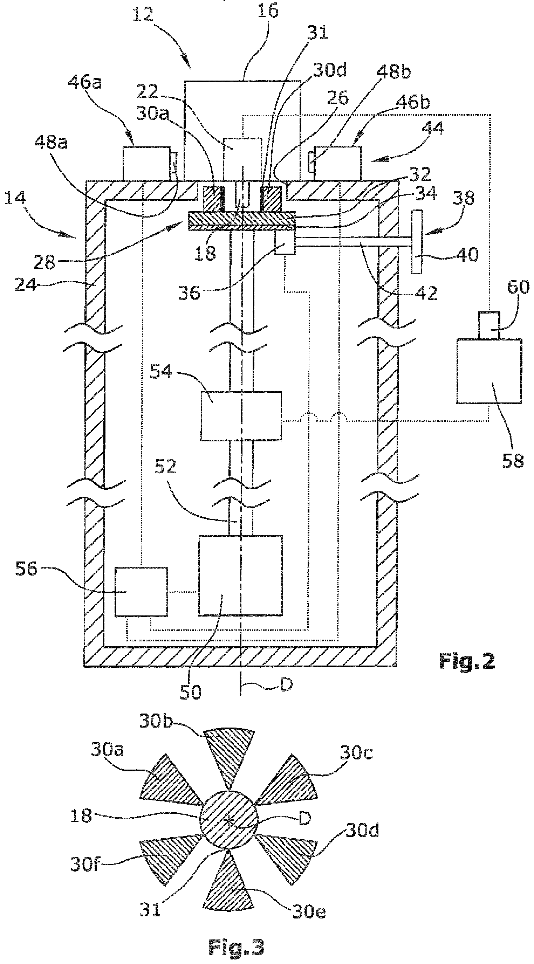

Die Figuren 1 und 2 zeigen eine Kalibrierungsvorrichtung 14 zur Kalibrierung eines Drehwinkelmesssystems 12. Das zu kalibrierende Drehwinkelmesssystem 12 wird zur Kalibrierung in die Kalibrierungsvorrichtung 14 eingesetzt. Das Drehwinkelmesssystem 12 umfasst ein im Wesentlichen zylinderförmiges Messsystem-Gehäuse 16 und eine Messsystem-Welle 18, die drehbar zu dem Messsystem-Gehäuse 16 in diesem gelagert ist. Die Messsystem-Welle 18 ragt an einer axialen Unterseite des Messsystem-Gehäuses 16 axial aus dem Messsystem-Gehäuses 16 heraus. Das Drehwinkelmesssystem 12 umfasst ferner ein drehfest mit dem Messsystem-Gehäuse 16 verbundenes Messsystem-Sensormodul 22 zur Erfassung einer Drehbewegung der Messsystem-Welle 18. Das Messsystem-Sensormodul 22 kann beispielsweise ein Magnetbasiertes Sensormodul mit einem nicht näher dargestellten Wiegand-Sensor sein.

Die Kalibrierungsvorrichtung 14 umfasst ein Kalibrierungsvorrichtungs-Gehäuse 24. Das Kalibrierungsvorrichtungs-Gehäuse 24 weist an einer axialen Oberseite eine vorzugsweise kreisförmige Öffnung 26 auf, durch die die Messsystem-Welle 18 des in die Kalibrierungsvorrichtung 14 eingesetzten Drehwinkelmesssystems 12 axial hindurchragt oder in die die Messsystem-Welle 18 zumindest eintaucht. Vorzugsweise ist die Messsystem-Welle 18 - zumindest in einer in Figur 1 dargestellten Kalibrierungs-Stellung der Kalibrierungsvorrichtung 14 - im Zentrum der Öffnung 26 positioniert.

Die Kalibrierungsvorrichtung 14 umfasst ferner eine Wellen-Haltevorrichtung 28, die in dem Kalibrierungsvorrichtungs-Gehäuse 24 angeordnet und um eine Drehachse D drehbar ist. Die Wellen-Haltevorrichtung 28 umfasst im vorliegenden Ausführungsbeispiel sechs Spannbacken 30a-f, die radial bewegbar an einem Spannbacken-Träger 32 angeordnet sind. Jede Spannbacke 30a-f weist auf ihrer radialen Innenseite eine rutschhemmende Beschichtung 31 auf. Die sechs Spanbacken 30a-f sind konzentrisch zu der Drehachse D angeordnet und - zumindest in der Kalibrierungs-Stellung - gleichmäßig verteilt entlang des Umfangs der Messsystem-Welle 18 des eingesetzten Drehwinkelmesssystems 12 positioniert. Benachbarte Spannbacken 30a-f sind also jeweils - bezogen auf einen Mittelpunkt der Messsystem-Welle 18 - um einen Winkel von 60° gedreht zueinander angeordnet. Die Spannbacken 30a-f sind derart radial bewegbar, dass die Spannbacken 30a-f mit der rutschhemmenden Beschichtung 31 in der Kalibrierungs-Stellung an eine radiale Außenseite der Messsystem-Welle 18 angepresst sind, und in einer in Figur 2 dargestellten Lade-Stellung nicht mit der radialen Außenseite der Messsystem-Welle 18 in physischem Kontakt sind. Die Wellen-Haltevorrichtung 28 ist somit in der Kalibrierungs-Stellung drehfest mit der Messsystem-Welle 18 verbunden, wobei die Messsystem-Welle 18 konzentrisch zur Drehachse D positioniert ist. In der Lade-Stellung ist die Wellen-Haltevorrichtung 28 hingegen mechanisch von der Messsystem-Welle 18 entkoppelt.

Die Wellen-Haltevorrichtung 28 weist einen Spannring 34 auf, der drehbar bezogen auf den Spannbacken-Träger 32 angeordnet ist. Die Wellen-Haltevorrichtung 28 ist derart ausgebildet, dass durch eine Verdrehung des Spannrings 34 bezüglich des Spannbacken-Träger 32 alle Spannbacken 30a-f gleichzeitig und gleichförmig radial bewegbar sind. Die Wellen-Haltevorrichtung 28 - im Speziellen der Spannring 34 der Wellen-Haltevorrichtung 28 - ist über ein Kopplungsmodul 36 bedarfsweise mit einem Spannbacken-Aktuator 38 koppelbar. Der Spannbacken-Aktuator 38 weist im vorliegenden Ausführungsbeispiel ein außerhalb des Kalibrierungsvorrichtungs-Gehäuses 24 angeordnetes Stellrad 40 auf, das über eine Stellrad-Welle 42 mit dem Kopplungsmodul 36 verbunden ist. Das Kopplungsmodul 36 ist hierbei derart ausgebildet, dass die Stellrad-Welle 42 im eingekoppelten Zustand mechanisch mit dem Spannring 34 - und folglich mit den Spannbacken 30a-f - gekoppelt ist, sodass die Spannbacken 30a-f durch eine Drehung des Stellrads 40 simultan und gleichförmig radial bewegbar sind. Beispielsweise kann das Kopplungsmodul 36 ein Zahnradgetriebe aufweisen, über das der Spannring 34 bedarfsweise mechanisch mit der Stellrad-Welle 42 koppelbar ist.

Die Kalibrierungsvorrichtung 14 umfasst ferner eine rotatorisch feststehende Gehäuse-Haltevorrichtung 44, die außerhalb des Kalibrierungsvorrichtungs-Gehäuses 24 an der Oberseite des Kalibrierungsvorrichtungs-Gehäuses 24 angebracht ist. Die Gehäuse-Haltevorrichtung 44 umfasst im vorliegenden Ausführungsbeispiel zwei Kolbeneinheiten 46a,b. Die Kolbeneinheiten 46a,b sind derart angeordnet, dass sie auf gegenüberliegenden Seiten des Messsystem-Gehäuses 16 des eingesetzten Drehwinkelmesssystems 12 positioniert sind. Jede Kolbeneinheit 46a,b weist einen Kolben 48a,b auf, der bezogen auf das Messsystem-Gehäuse 16 radial bewegbar ist. Im vorliegenden Ausführungsbeispiel sind die Kolben 48a,b jeweils pneumatisch bewegbar. Die Kolben 48a,b sind in der Kalibrierungs-Stellung jeweils an eine radiale Außenseite des Messsystem-Gehäuses 16 angepresst. In der Lade-Stellung sind die Kolben 48a,b bezogen auf die Kalibrierungs-Stellung nach radial außen verschoben, sodass die Kolben 48a,b nicht in physischem Kontakt mit dem Messsystem-Gehäuse 16 sind. Die Gehäuse-Haltevorrichtung 44 ist somit in der Kalibrierungs-Stellung drehfest mit dem Messsystem-Gehäuse 16 verbunden, und ist in der Lade-Stellung von dem Messsystem-Gehäuse 16 mechanisch entkoppelt.

Die Kalibrierungsvorrichtung 14 umfasst ferner einen Antriebsmotor 50, der in dem Vorrichtungsgehäuse 24 angeordnet ist und über eine Antriebswelle 52 mechanisch mit der Wellen-Haltevorrichtung 28 gekoppelt ist. Vorzugsweise ist der Antriebsmotor 50 ein Elektromotor. Die Antriebswelle 52 ist an einem ersten axialen Ende drehfest mit der Wellen-Haltevorrichtung 28 - im Speziellen mit dem Spannbacken-Träger 32 der Wellen-Haltevorrichtung 28 - verbunden, und ist an einem zweiten gegenüberliegenden axialen Ende drehfest mit einem nicht näher dargestellten Rotor des Antriebsmotors 50 verbunden. Die Wellen-Haltevorrichtung 28 mit den Spannbacken 30a-f ist somit durch den Antriebsmotor 50 rotatorisch antreibbar.

An der Antriebswelle 52 ist ein kalibriertes Referenz-Sensormodul 54 angeordnet, durch das ein aktueller Drehwinkel der Antriebwelle 52 erfassbar ist. Im vorliegenden Ausführungsbeispiel ist das Referenz-Sensormodul 54 ein hochauflösendes optisches Sensormodul.

Die Kalibrierungsvorrichtung 14 umfasst im vorliegenden Ausführungsbeispiel ferner eine elektronische Steuereinheit 56. Die Steuereinheit 56 ist mit dem Antriebsmotor 50, den Kolbeneinheiten 46a,b der Gehäuse-Haltevorrichtung 44, sowie mit der Kopplungseinheit 36 jeweils elektrisch und/oder signal-technisch verbunden, sodass der Antriebsmotor 50, die Bewegung der Kolben 48a,b und der Kopplungszustand der Kopplungseinheit 36 durch die Steuereinheit 56 steuerbar sind. Die Steuereinheit 56 ist hierbei derart ausgebildet, dass vor einer Ansteuerung des Antriebsmotors 50 zum einen die Kolbeneinheiten 46a,b angesteuert werden, um die Kolben 48a,b radial an das Messsystem-Gehäuse 16 anzupressen, und zum anderen die Kopplungseinheit 36 angesteuert wird, um den Stellradantrieb 38 von der Wellen-Haltevorrichtung 28 zu entkoppeln. Hierdurch ist sichergestellt, dass zum Zeitpunkt des Antreibens der Wellen-Haltevorrichtung 28 durch den Antriebsmotor 50 zum einen das Messsystem-Gehäuse 16 über die Gehäuse-Haltevorrichtung 44 drehfest mit dem Kalibrierungsvorrichtungs-Gehäuse 24 verbunden ist und zum anderen die Wellen-Haltevorrichtung 28 durch die Kopplungseinheit 36 mechanische von dem Spannbacken-Aktuator 38 entkoppelt ist.

Die Kalibrierungsvorrichtung 14 umfasst im vorliegenden Ausführungsbeispiel eine separate, außerhalb des Kalibrierungsvorrichtungs-Gehäuses 24 angeordnete Auswerteeinheit 58. Alternativ können die Auswerteeinheit 58 und die Steuereinheit 56 auch durch ein einziges - vorzugsweise in dem Kalibrierungsvorrichtungs-Gehäuses 24 angeordnetes - elektronisch Bauelement gebildet sein. Die Auswerteeinheit 58 ist über eine Selektionsschaltung 60 elektrisch und/oder signal-technisch mit dem zu kalibrierenden Messsystem-Sensormodul 22 verbunden. Durch die Selektionsschaltung 60 ist hierbei eine einfache Adaption der Kalibrierungsvorrichtung 14 an unterschiedlich konfektionierte Anschlussstecker des Drehwinkelmesssystems 12 möglich. Die Selektionsschaltung 60 ist im vorliegenden Ausführungsbeispiel der Erfindung als separate Einheit ausgebildet, kann jedoch alternativ auch als Teil der Auswerteeinheit 58 ausgebildet sein. Die Auswerteeinheit 58 ist ferner mit dem kalibrierten Referenz-Sensormodul 54 elektrisch und/oder signal-technisch verbunden.

Während des Kalibrierungsprozesses befinden sich die Wellen-Haltevorrichtung 28 und die Gehäuse-Haltevorrichtung 44 in der Kalibrierungs-Stellung, sodass das Messsystem-Gehäuse 16 über die Gehäuse-Haltevorrichtung 44 drehfest mit dem Kalibrierungsvorrichtungs-Gehäuse 24 verbunden ist, und die Messystem-Welle 18 über die Wellen-Haltevorrichtung 28 drehfest mit der Antriebswelle 52 verbunden ist. Ferner ist während des Kalibrierungsprozesses der Spannbacken-Antrieb 38 durch das Kopplungsmodul 36 mechanisch von der Wellen-Haltevorrichtung 28 entkoppelt.

Zur Kalibrierung des Drehwinkelmesssystems 12 wird die Messsystem-Welle 18 über die Antriebswelle 52 und die Wellen-Haltevorrichtung 28 durch den Antriebsmotor 50 der Kalibrierungsvorrichtung 14 rotatorisch angetrieben. Hierbei wird von der Auswerteeinheit 58 über das Referenz-Sensormodul 54 die Drehbewegung der Antriebswelle 52 und somit auch die Drehbewegung der Messsystem-Welle 18 erfasst, die über die Wellen-Haltevorrichtung 28 drehfest mit der Antriebswelle 52 verbunden ist. Das Drehwinkelmesssystem 12 wird durch die Auswerteeinheit 58 derart kalibriert, dass ein von dem Messsystem-Sensormodul 22 bereitgestelltes Messsystem-Sensorsignal mit einem von dem Referenz-Sensormodul 54 bereitgestellten Referenz-Sensorsignal übereinstimmt.

### Bezugszeichenliste

- 12: Drehwinkelmesssystem
- 14: Kalibrierungsvorrichtung
- 16: Messsystem-Gehäuse
- 18: Messsystem-Welle
- 22: Messsystem-Sensormodul
- 24: Kalibrierungsvorrichtungs-Gehäuse
- 26: Gehäuse-Öffnung
- 28: Wellen-Haltevorrichtung
- 30a-f: Spannbacken
- 31: rutschhemmende Beschichtung
- 32: Spannbacken-Träger
- 34: Spannring
- 36: Kopplungsmodul
- 38: Spannbacken-Aktuator
- 40: Stellrad
- 42: Stellrad-Welle
- 44: Gehäuse-Haltevorrichtung
- 46a,b: Kolbeneinheiten
- 48a,b: Kolben
- 50: Antriebsmotor
- 52: Antriebswelle
- 54: Referenz-Sensormodul
- 56: Steuereinheit
- 58: Auswerteeinheit
- 60: Selektionsschaltung
- D: Drehachse

## Patentansprüche

1. Kalibrierungsvorrichtung (14) für ein Drehwinkelmesssystem (12), mit
- einer um eine Drehachse (D) drehbaren Wellen-Haltevorrichtung (28), die in einer Kalibrierungs-Stellung der Kalibrierungsvorrichtung (14) drehfest mit einer Messsystem-Welle (18) des Drehwinkelmesssystems (12) verbindbar ist und in einer Lade-Stellung der Kalibrierungsvorrichtung (14) von der Messsystem-Welle (18) entkoppelbar ist,
- einer rotatorisch feststehenden Gehäuse-Haltevorrichtung (44), die in der Kalibrierungs-Stellung drehfest mit einem Messsystem-Gehäuse (16) des Drehwinkelmesssystems (12) verbindbar ist und in der Lade-Stellung von dem Messsystem-Gehäuse (16) entkoppelbar ist, und
- einem Antriebsmotor (50) zum Antreiben der Wellen-Haltevorrichtung (28),
wobei die Wellen-Haltevorrichtung (28) mindestens zwei Spannbacken (30a-f) aufweist, die in der Kalibrierungs-Stellung an eine radiale Außenseite der Messsystem-Welle (18) anpressbar sind, wobei die mindestens zwei Spannbacken (30a-f) konzentrisch zu der Drehachse (D) angeordnet und gemeinsam radial bewegbar sind, und wobei ein Spannbacken-Aktuator (38) vorhanden ist, der eine im Wesentlichen stufenlose radiale Bewegung der Spannbacken (30a-f) ermöglicht, und
wobei ein Kopplungsmodul (36) vorhanden ist, über das der Spannbacken-Aktuator (38) wahlweise mechanisch mit den Spannbacken (30a-f) koppelbar ist oder mechanisch von den Spannbacken (30a-f) entkoppelbar ist, und
wobei eine Steuereinheit (56) vorhanden ist, durch die sowohl der Antriebsmotor (50) als auch die Bewegung der Spannbacken (30a-f) steuerbar ist, und
wobei das Kopplungsmodul (36) durch die Steuereinheit (56) steuerbar ist.

2. Kalibrierungsvorrichtung (14) für ein Drehwinkelmesssystem (12) nach Anspruch 1, wobei der Spannbacken-Aktuator (38) ein Stellrad (40) zur manuellen Betätigung der Spannbacken (30a-f) aufweist.

3. Kalibrierungsvorrichtung (14) für ein Drehwinkelmesssystem (12) nach einem der vorhergehenden Ansprüche, wobei die Wellen-Haltevorrichtung (28) mindesten drei Spannbacken (30a-f) aufweist, die in der Kalibrierungs-Stellung an die radiale Außenseite der Messsystem-Welle (18) anpressbar sind, wobei die mindestens drei Spannbacken (30a-f) konzentrisch zu der Drehachse (D) angeordnet und gemeinsam radial bewegbar sind.

4. Kalibrierungsvorrichtung (14) für ein Drehwinkelmesssystem (12) nach einem der vorhergehenden Ansprüche, wobei auf einer radialen Innenseite mindestens einer Spannbacke (30a-f) eine rutschhemmende Beschichtung (31) vorgesehen ist.

5. Kalibrierungsvorrichtung (14) für ein Drehwinkelmesssystem (12) nach einem der vorhergehenden Ansprüche, wobei die Gehäuse-Haltevorrichtung (44) mindestens zwei radial bewegbare Kolben (48a,b) aufweist, die in der Kalibrierungs-Stellung an eine radiale Außenseite des Messsystem-Gehäuses (16) anpressbar sind.

6. Kalibrierungsvorrichtung (14) für ein Drehwinkelmesssystem (12) nach Anspruch 5, wobei die mindestens zwei Kolben (48a,b) jeweils pneumatisch bewegbar sind.

7. Kalibrierungsvorrichtung (14) für ein Drehwinkelmesssystem (12) nach einem der Ansprüche 5 oder 6, wobei die Bewegung der Kolben (48a,b) durch die Steuereinheit (56) steuerbar ist.

8. Kalibrierungsvorrichtung (14) für ein Drehwinkelmesssystem (12) nach einem der vorhergehenden Ansprüche, wobei die Wellen-Haltevorrichtung (28) über eine Antriebswelle (52) mechanisch an den Antriebsmotor (50) gekoppelt ist.

9. Kalibrierungsvorrichtung (14) für ein Drehwinkelmesssystem (12) nach Anspruch 8, ist ein Referenz-Sensormodul (54) vorgesehen, durch das ein Drehwinkel der Antriebswelle (52) erfassbar ist.

10. Kalibrierungsvorrichtung (14) für ein Drehwinkelmesssystem (12) nach einem der vorhergehenden Ansprüche, wobei eine Selektionsschaltung (60) vorgesehen ist, über die die Kalibrierungsvorrichtung (14) elektrisch und/oder signaltechnisch mit dem Drehwinkelmesssystem (12) verbindbar ist.

## Claims

1. Calibration apparatus (14) for a rotary angle measuring system (12), with
- a shaft holding apparatus (28) which is rotatable about an axis of rotation (D) and which, in a calibration position of the calibration apparatus (14), can be connected in a rotationally fixed manner to a measuring system shaft (18) of the rotational angle measuring system (12) and which, in a loading position of the calibration apparatus (14), can be decoupled from the measuring system shaft (18),
- a rotationally stationary housing holding apparatus (44) which, in the calibration position, can be connected in a rotationally fixed manner to a measuring system housing (16) of the rotary angle measuring system (12) and, in the loading position, can be decoupled from the measuring system housing (16), and
- a drive motor (50) for driving the shaft holding apparatus (28), wherein the shaft holding apparatus (28) comprises at least two clamping jaws (30a-f) which, in the calibration position, can be pressed against a radial outside of the measuring system shaft (18), wherein the at least two clamping jaws (30a-f) are arranged concentrically with respect to the axis of rotation (D) and can be radially moved collectively, and
wherein a clamping jaw actuator (38) is provided which allows a substantially stepless radial movement of the clamping jaws (30a-f), and
wherein a coupling module (36) is provided, via which the clamping jaw actuator (38) can be selectively mechanically coupled to the clamping jaws (30a-f) or mechanically decoupled from the clamping jaws (30a-f), and
wherein a control unit (56) is provided, by which the drive motor (50) as well as the movement of the clamping jaws (30a-f) can be controlled, and
wherein the coupling module (36) can be controlled by the control unit (56).

2. Calibration apparatus (14) for a rotary angle measuring system (12) according to claim 1, wherein the clamping jaw actuator (38) comprises an adjusting wheel (40) for manual operation of the clamping jaws (30a-f).

3. Calibration apparatus (14) for a rotary angle measuring system (12) according to one of the preceding claims, wherein the shaft holding apparatus (28) comprises at least three clamping jaws (30a-f) which, in the calibration position, can be pressed against the radial outside of the measuring system shaft (18), wherein the at least three clamping jaws (30a-f) are arranged concentrically with respect to the axis of rotation (D) and can be radially moved collectively.

4. Calibration apparatus (14) for a rotary angle measuring system (12) according to one of the preceding claims, wherein an anti-slip coating (31) is provided on a radial inside of at least one clamping jaw (30a-f).

5. Calibration apparatus (14) for a rotary angle measuring system (12) according to one of the preceding claims, wherein the housing holding apparatus (44) comprises at least two radially movable pistons (48a,b) which, in the calibration position, can be pressed against a radial outside of the measuring system housing (16).

6. Calibration apparatus (14) for a rotary angle measuring system (12) according to claim 5, wherein the at least two pistons (48a,b) can each be moved pneumatically.

7. Calibration apparatus (14) for a rotary angle measuring system (12) according to one of claims 5 or 6, wherein the movement of the pistons (48a,b) can be controlled by the control unit (56).

8. Calibration apparatus (14) for a rotary angle measuring system (12) according to one of the preceding claims, wherein the shaft holding apparatus (28) is mechanically coupled to the drive motor (50) via a drive shaft (52).

9. Calibration apparatus (14) for a rotary angle measuring system (12) according to claim 8, a reference sensor module (54) is provided by which an angle of rotation of the drive shaft (52) can be detected.

10. Calibration apparatus (14) for a rotary angle measuring system (12) according to one of the preceding claims, wherein a selection circuit (60) is provided via which the calibration apparatus (14) can be electrically and/or signal-technically connected to the rotary angle measuring system (12).

## Revendications

1. Appareil de calibrage (14) pour un système de mesure d'angle de rotation (12), avec
- un dispositif de maintien d'arbre (28) pouvant tourner autour un axe de rotation (D), qui, dans une position de calibrage du dispositif de calibrage (14), peut être relié solidairement en rotation à un arbre de système de mesure (18) du système de mesure d'angle de rotation (12) et qui, dans une position de chargement du dispositif de calibrage (14), peut être désaccouplé de l'arbre de système de mesure (18),
- un dispositif de maintien de boîtier (44) fixe en rotation qui, dans la position de calibrage, peut être relié de manière solidaire en rotation à un boîtier de système de mesure (16) du système de mesure d'angle de rotation (12) et qui, dans la position de chargement, peut être désaccouplé du boîtier de système de mesure (16), et
- un moteur d'entraînement (50) pour entraîner le dispositif de maintien d'arbre (28),
le dispositif de maintien d'arbre (28) comprenant au moins deux mâchoires de serrage (30a-f) qui, dans la position de calibrage, peuvent être pressées contre un côté extérieur radial de l'arbre (18) du système de mesure, les au moins deux mâchoires de serrage (30a-f) étant disposées de manière concentrique par rapport à l'axe de rotation (D) et pouvant être déplacées radialement ensemble, et
un actionneur de mâchoires de serrage (38) étant prévu, qui permet un mouvement radial substantiellement continu des mâchoires de serrage (30a-f), et
un module de couplage (36) étant prévu, au moyen duquel l'actionneur de mâchoires de serrage (38) peut être couplé mécaniquement avec les mâchoires de serrage (30a-f) ou découplé mécaniquement des mâchoires de serrage (30a-f), au choix, et
une unité de commande (56) étant prévue, par laquelle aussi bien le moteur d'entraînement (50) que le mouvement des mâchoires de serrage (30a-f) peuvent être commandés, et
le module de couplage (36) pouvant être commandé par l'unité de commande (56).

2. Appareil de calibrage (14) pour un système de mesure d'angle de rotation (12) selon la revendication 1, dans lequel l'actionneur de mâchoires (38) comprend une roue de réglage (40) pour manipuler manuellement les mâchoires (30a-f).

3. Appareil de calibrage (14) pour un système de mesure d'angle de rotation (12) selon l'une des revendications précédentes, dans lequel le dispositif de maintien d'arbre (28) comprend au moins trois mâchoires de serrage (30a-f) qui, en position de calibrage, peuvent être pressées contre la face radialement extérieure de l'arbre (18) du système de mesure, les au moins trois mâchoires de serrage (30a-f) étant disposées concentriquement à l'axe de rotation (D) et pouvant être déplacées radialement ensemble.

4. Appareil de calibrage (14) pour un système de mesure d'angle de rotation (12) selon l'une des revendications précédentes, dans lequel un revêtement antidérapant (31) est prévu sur une face interne radiale d'au moins une mâchoire de serrage (30a-f).

5. Appareil de calibrage (14) pour un système de mesure d'angle de rotation (12) selon l'une des revendications précédentes, dans lequel le dispositif de maintien du boîtier (44) comprend au moins deux pistons (48a, b) mobiles radialement qui, en position de calibrage, peuvent être pressés contre une face radiale extérieure du boîtier (16) du système de mesure.

6. Appareil de calibrage (14) pour un système de mesure d'angle de rotation (12) selon la revendication 5, dans lequel les au moins deux pistons (48a, b) sont respectivement mobiles de manière pneumatique.

7. Appareil de calibrage (14) pour un système de mesure d'angle de rotation (12) selon l'une des revendications 5 ou 6, dans lequel le mouvement des pistons (48a, b) peut être commandé par l'unité de commande (56).

8. Appareil de calibrage (14) pour un système de mesure d'angle de rotation (12) selon l'une des revendications précédentes, dans lequel le dispositif de maintien d'arbre (28) est couplé mécaniquement au moteur d'entraînement (50) par un arbre d'entraînement (52).

9. Appareil de calibrage (14) pour un système de mesure d'angle de rotation (12) selon la revendication 8, il est prévu un module de senseur de référence (54) par lequel un angle de rotation de l'arbre d'entraînement (52) peut être détecté.

10. Appareil de calibrage (14) pour un système de mesure d'angle de rotation (12) selon l'une des revendications précédentes, dans lequel il est prévu un circuit de sélection (60) par lequel l'appareil de calibrage (14) peut être relié électriquement et/ou par signal au système de mesure d'angle de rotation (12).
